# FASCICULE DE BREVET EUROPEEN

(11) **EP 0 934 877 B1**
(45) Date de publication et mention de la délivrance du brevet: **11.06.2003**
(21) Numéro de dépôt: 99400223.6
(22) Date de dépôt: 02.02.1999
(51) Int. Cl.: B64D 27/26

(54) **Dispositif d'accrochage d'un moteur d'aéronef**
Triebwerksaufhängung an Luftfahrzeugen
Mounting arrangement for an aircraft engine

(30) Priorité: 04.02.1998 FR 9801290
(43) Date de publication de la demande: 11.08.1999
(73) Titulaire: AIRBUS France, 31060 Toulouse Cedex 03 (FR)
(72) Inventeur: Le Blaye, Sébastien, 31620 Villaudric (FR)
(74) Mandataire: Poulin, Gérard

(56) Documents cités:
- EP-A- 0 527 672
- US-A- 5 620 154
- US-A- 5 649 417

## Description

### Domaine technique

L'invention concerne un dispositif d'accrochage d'un moteur d'aéronef sur un pylône fixé à une structure de l'aéronef telle qu'une aile ou un élément de fuselage.

De façon plus précise, l'invention concerne un dispositif d'accrochage chargé de reprendre, par exemple, des efforts latéraux, verticaux et/ou le couple moteur. Un tel dispositif d'accrochage constitue l'un des éléments d'un système d'accrochage par lequel les efforts engendrés par le moteur sont retransmis à l'aéronef par l'intermédiaire du pylône.

### Etat de la technique

De façon connue, les moteurs qui équipent les aéronefs sont suspendus ou accrochés latéralement à un pylône, lui-même fixé respectivement sous la voilure ou sur le fuselage de l'aéronef.

Les systèmes d'accrochage qui relient les moteurs au pylône sont généralement constitués d'au moins deux ou trois dispositifs d'accrochage séparés. L'un de ces dispositifs est chargé, par exemple, de reprendre les efforts latéraux et verticaux engendrés par le moteur, pour les retransmettre à l'aéronef par l'intermédiaire du pylône. Le plus souvent, ce dispositif d'accrochage assure également la transmission du couple moteur. Toutefois, cette transmission peut se faire par l'intermédiaire d'un dispositif d'accrochage séparé.

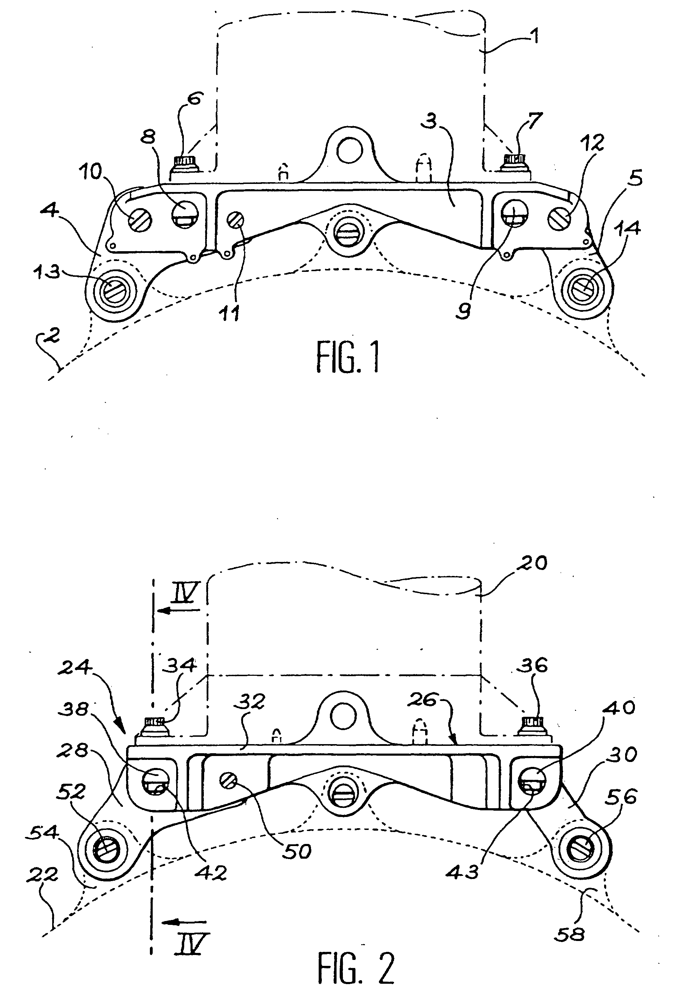

D'une manière connue et systématique, le dispositif d'accrochage qui assure la reprise des efforts latéraux, verticaux et, le plus souvent, du couple moteur, présente une structure du type de celle qui est illustrée sur la figure 1 des dessins annexés.

Sur cette figure, la référence 1 désigne le pylône sur lequel doit être accroché le moteur 2. Le dispositif d'accrochage comprend essentiellement une ferrure 3, ainsi que deux à quatre bielles (deux bielles 4 et 5 sont illustrées sur la figure 1). La ferrure 3 est fixée sur le pylône 1 par deux paires de vis de traction 6 et 7, vissées dans des écrous à barillets 8 et 9, eux-mêmes logés dans des alésages qui traversent la ferrure 3.

Par ailleurs, les bielles 4 et 5 assurent la liaison entre la ferrure 3 et le moteur 2. A cet effet, chaque bielle est reliée à la ferrure 3 par un ou deux axes et au moteur 2 par un axe. Ainsi, dans le cas de la figure 1, la bielle 4 est reliée à la ferrure 3 par deux axes 10 et 11 situés de part et d'autre de l'alésage dans lequel sont reçus les écrous à barillets 8, alors que la bielle 5 est reliée à la ferrure 3 par un seul axe 12, décalé circonférentiellement vers l'extérieur par rapport à l'alésage dans lequel sont reçus les écrous à barillets 9. Les axes reliant respectivement les bielles 4 et 5 au moteur 2 sont désignés par les références 13 et 14.

Des dispositifs d'accrochage existants réalisés selon ce principe sont illustrés notamment par les documents EP-A-0 527 672, US-A-5 620 154 et US-A-5 649 417.

Les dispositifs d'accrochage de ce type, qui équipent pratiquement tous les avions commercialisés à ce jour, ne permettent pas de résoudre les problèmes engendrés par l'apparition récente de nouveaux moteurs perfectionnés, plus performants.

Ainsi, la recherche permanente d'un accroissement de la poussée se traduit notamment par l'apparition de moteurs dont le diamètre d'entrée d'air est de plus en plus important. Lorsque les moteurs sont accrochés sous les ailes des aéronefs, il est donc souhaitable de pouvoir les surélever afin d'éviter qu'ils ne touchent le sol.

Avec les dispositifs d'accrochage existants, du type décrit précédemment en se référant à la figure 1, cela nécessite de remonter les bielles 4 et 5, c'est-à-dire de les rapprocher de l'horizontale. Etant donné que les points de fixation des bielles sur le moteur ne peuvent être déplacés, cela conduit soit à rapprocher les axes d'articulation 10 et 12 des alésages dans lesquels sont reçus les écrous à barillets 8 et 9, soit au contraire à accroître la longueur circonférentielle de la ferrure 3, afin de décaler les axes d'articulation des bielles sur la ferrure vers l'extérieur par rapport aux axes d'articulation 13 et 14 des bielles sur le moteur.

Si la première solution était adoptée, cela reviendrait à diminuer l'écart existant entre les alésages dans lesquels sont reçus les écrous à barillets 8 et 9 et les alésages dans lesquels sont reçus les axes d'articulation 10 et 12. Cette solution n'est pas envisageable dans la pratique, car elle conduirait à une diminution inadmissible de l'écart entre les alésages. En effet, la diminution de cet écart entraînerait un risque de rupture de la ferrure, devenue trop mince dans la zone concernée.

L'autre solution, consistant à augmenter la longueur circonférentielle de la ferrure 3, n'est pas non plus applicable dans la pratique, pour des raisons aérodynamiques. En effet, la présence de la ferrure 3 crée des turbulences qui perturbent l'écoulement de l'air et entraînent une perte de poussée. Une augmentation de la longueur circonférentielle de la ferrure se traduirait donc par un accroissement inacceptable des turbulences. Il est, au contraire, souhaitable de réduire les turbulences en diminuant l'écartement entre les axes 10 et 12 par lesquels les bielles 4 et 5 sont articulées sur la ferrure 3.

Les dispositifs d'accrochage existants empêchent donc, dans la pratique, l'intégration de moteurs de conception nouvelle présentant une poussée accrue.

### Exposé de l'invention

L'invention a précisément pour objet un dispositif d'accrochage d'un moteur d'aéronef, dont la conception originale lui permet d'envisager l'intégration de moteurs de plus forte poussée, sans accroître les perturbations aérodynamiques créées par le dispositif et en préservant les caractéristiques de tenue mécanique de celui-ci.

Conformément à l'invention, ce résultat est obtenu au moyen d'un dispositif d'accrochage d'un moteur sur un pylône fixé à une structure d'aéronef, comprenant une ferrure intermédiaire apte à être fixée au pylône par des vis vissées dans des écrous à barillets logés dans des alésages traversant la ferrure, et au moins deux bielles articulées sur la ferrure par des axes, de façon à relier la ferrure au moteur, caractérisé par le fait qu'au moins l'un desdits axes est monté dans l'un des alésages logeant les écrous à barillets.

Selon un mode de réalisation préféré de l'invention, deux écrous à barillets sont logés respectivement dans deux tronçons de chaque alésage, situés de part et d'autre d'une saignée que traverse l'une des bielles, de telle sorte que ledit axe est monté au moins dans des parties desdits tronçons adjacentes à la saignée.

Ce mode de réalisation préféré de l'invention peut prendre différentes formes, selon les diamètres relatifs des écrous à barillets et des axes de pivotement.

Ainsi, lorsque le diamètre de l'axe est inférieur à celui des écrous à barillets et de l'alésage, l'axe est monté dans les tronçons précités de l'alésage par l'intermédiaire de deux bagues, épaulées ou non. Les deux écrous à barillets sont alors logés dans chacun des tronçons de l'alésage, au-delà des extrémités de l'axe.

Lorsque les deux écrous à barillets ont un diamètre inférieur à celui de l'axe et de l'alésage, ils peuvent être reçus dans des logements usinés dans des parties d'extrémité de l'axe, ces parties d'extrémité étant alors montées dans les tronçons précités de l'alésage.

Lorsque les deux écrous à barillets ont un diamètre inférieur à celui de l'axe et de l'alésage, ils peuvent aussi être montés dans les tronçons précités de l'alésage, au-delà des extrémités de l'axe, par l'intermédiaire de deux bagues épaulées ou non.

Dans le cas où les deux écrous à barillets ont un diamètre égal à celui de l'axe, ils peuvent être montés directement dans les tronçons précités de l'alésage, au-delà des extrémités de l'axe.

Dans ce même cas, les deux écrous à barillets et l'axe peuvent aussi être réalisés en une seule pièce de diamètre uniforme.

Enfin, toujours lorsque l'axe et les deux écrous à barillets ont le même diamètre, deux supports d'écrous et l'axe peuvent être réalisés en une seule pièce de diamètre uniforme, des écrous flottants étant alors montés dans les supports d'écrous.

Quelle que soit la forme de réalisation de l'invention, la ferrure intermédiaire est généralement apte à être fixée au pylône par quatre vis, vissées dans quatre écrous à barillets logés deux à deux dans deux alésages traversant des régions d'extrémité de la ferrure. De préférence, deux axes d'articulation des deux bielles sont alors reçus respectivement dans les alésages précités.

### Brève description des dessins

On décrira à présent, à titre d'exemples non limitatifs, différentes formes de réalisation de l'invention, en se référant aux dessins annexés, dans lesquels :
- la figure 1, déjà décrite, est une vue de face d'un dispositif d'accrochage de moteur selon l'art antérieur ;
- la figure 2 est une vue de face, comparable à la figure 1, illustrant un dispositif d'accrochage de moteur d'avion conforme à l'invention ;
- la figure 3 est une vue en perspective du dispositif de la figure 2 ;
- la figure 4 est une vue en coupe selon la ligne IV-IV de la figure 2, illustrant une première forme de réalisation de l'invention ;
- la figure 5 est une vue en coupe comparable à la figure 4, illustrant une deuxième forme de réalisation de l'invention ;
- la figure 6 est une vue en coupe comparable aux figures 4 et 5, illustrant une troisième forme de réalisation de l'invention ;
- la figure 7 est une vue en coupe comparable aux figures 4 à 6, illustrant une quatrième forme de réalisation de l'invention ;
- la figure 8 est une vue en coupe comparable aux figures 4 à 7, illustrant une cinquième forme de réalisation de l'invention ; et
- la figure 9 est une vue en coupe comparable aux figures 4 à 8, illustrant une sixième forme de réalisation de l'invention.

### Description détaillée de formes de réalisation préférées de l'invention

Sur la figure 2, la référence 20 désigne un pylône prévu pour être fixé, de façon connue, à une structure d'un aéronef, telle qu'une aile ou un élément de fuselage de celui-ci. Plus précisément, la référence 20 correspond à la partie du pylône conçue pour reprendre les efforts latéraux et verticaux et, le plus souvent, le couple moteur, engendré par un moteur (non représenté), afin que ces efforts soient retransmis à l'aéronef par l'intermédiaire du pylône 20.

Par ailleurs, la référence 22 (figure 2) désigne une pièce qui fait partie intégrante de la structure non tournante du moteur ou qui est prévue pour être fixée sur cette structure selon des techniques connues, qui ne font pas partie de l'invention. Seule la partie de la pièce 22 adjacente au pylône 20 est illustrée, en traits discontinus, sur la figure 2. Il est à noter que la pièce 22, par laquelle le moteur est accroché au pylône 20, peut être située indifféremment à l'avant ou à l'arrière du moteur.

La liaison entre le pylône 20 et la pièce 22 est assurée par un dispositif d'accrochage 24 conforme à l'invention. Il est rappelé que ce dispositif d'accrochage 24 a pour fonction de reprendre les efforts latéraux et verticaux ainsi, éventuellement, que le couple moteur, pour les transmettre à la structure de l'aéronef au travers du pylône 20. Tous les autres efforts sont transmis par d'autres dispositifs d'accrochage (non représentés) qui peuvent être réalisés selon différentes techniques connues et ne font pas partie de l'invention.

Le dispositif d'accrochage 24 conforme à l'invention comprend une ferrure intermédiaire 26, une bielle latérale à trois axes 28 et une bielle latérale simple 30.

La ferrure intermédiaire 26 comprend une semelle 32, qui présente une face plane prévue pour être appliquée contre une face plane correspondante du pylône 20. Lorsque le moteur est accroché sous la voilure de l'aéronef, la face plane du pylône 20 est tournée vers le bas, comme l'illustre, à titre d'exemple la figure 2.

La ferrure 26 est fixée au pylône 20 par deux paires de vis de traction 34 et 36, respectivement vissées dans deux paires d'écrous à barillets 38 et 40, noyées dans la ferrure intermédiaire 26. Il est rappelé qu'un écrou à barillet est un écrou qui présente une surface extérieure cylindrique dont l'axe est perpendiculaire à l'axe du trou taraudé qui le traverse. Un écrou à barillet peut être réalisé, selon le cas, en une ou deux pièces. Dans le second cas, il comprend un écrou flottant, monté dans un logement formé dans un support d'écrou cylindrique.

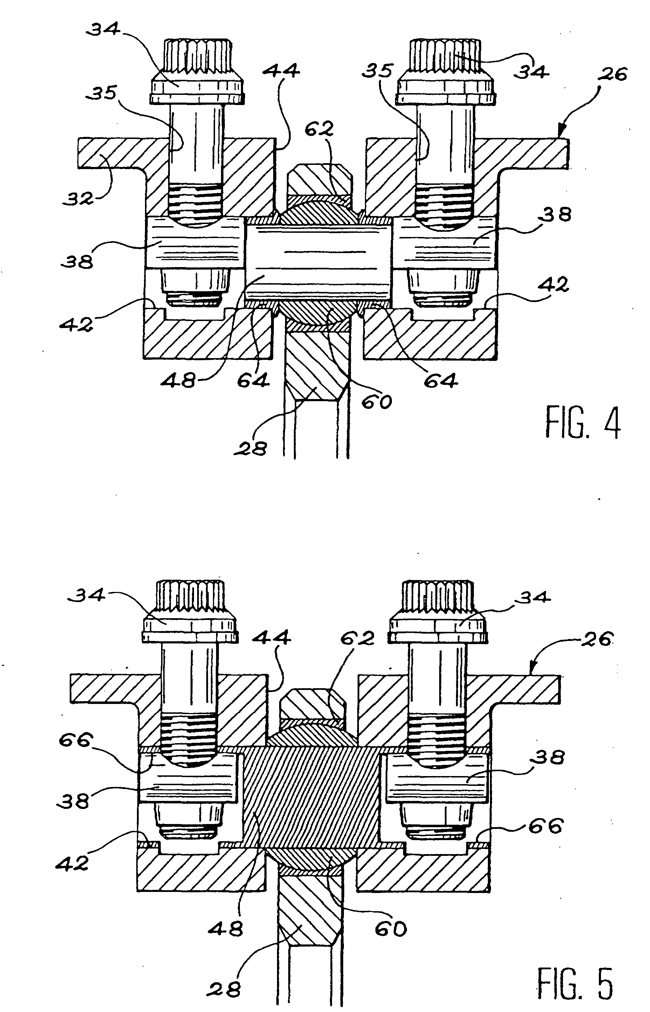

Comme le montre notamment la figure 4, chaque paire d'écrous à barillets 38, 40 est logée dans un alésage respectif 42, 43 qui traverse la ferrure 26 parallèlement à l'axe du moteur. Par ailleurs, les vis 34, 36 traversent des trous alignés, usinés respectivement dans le pylône 20 et dans la ferrure 26, ces trous débouchant dans les alésages 42 et 43. Les trous de passage 35 des vis 34 apparaissent sur la figure 4. Les têtes des vis 34 et 36 viennent en appui contre des surfaces d'appui prévues à cet effet sur le pylône 20, de façon à plaquer les surfaces planes du pylône et de la ferrure l'une contre l'autre lorsque les vis sont vissées dans les écrous à barillet 38 et 40.

La ferrure intermédiaire 26 s'étend sensiblement dans une direction circonférentielle par rapport à l'axe du moteur. Dans cette direction circonférentielle, chacune des extrémités de la ferrure 26 est traversée par une saignée 44, 46, qui lui donne la forme d'une chape. Les saignées 44, 46 peuvent traverser totalement la ferrure 26, comme l'illustrent les figures, ou seulement partiellement.

La bielle latérale à trois axes 28 présente approximativement la forme d'un V dont l'une des branches est reçue dans la saignée 44. La liaison entre cette branche de la bielle 28 et la ferrure 26 est assurée par deux axes 48 (figure 4) et 50. Ces axes 48 et 50 traversent à la fois la chape formée dans la ferrure 26 par la saignée 44 et la branche de la bielle 28 reçue dans cette saignée, parallèlement à l'axe du moteur.

Conformément à l'invention, l'un 48 des deux axes précités, visible sur la figure 4, est reçu dans le même alésage 42 que les deux écrous à barillets 38 dans lesquels sont vissées les vis 34. En d'autres termes, l'axe 48 et les écrous à barillets 38 sont agencés coaxialement. Cet agencement peut prendre différentes formes qui seront décrites plus en détail ultérieurement.

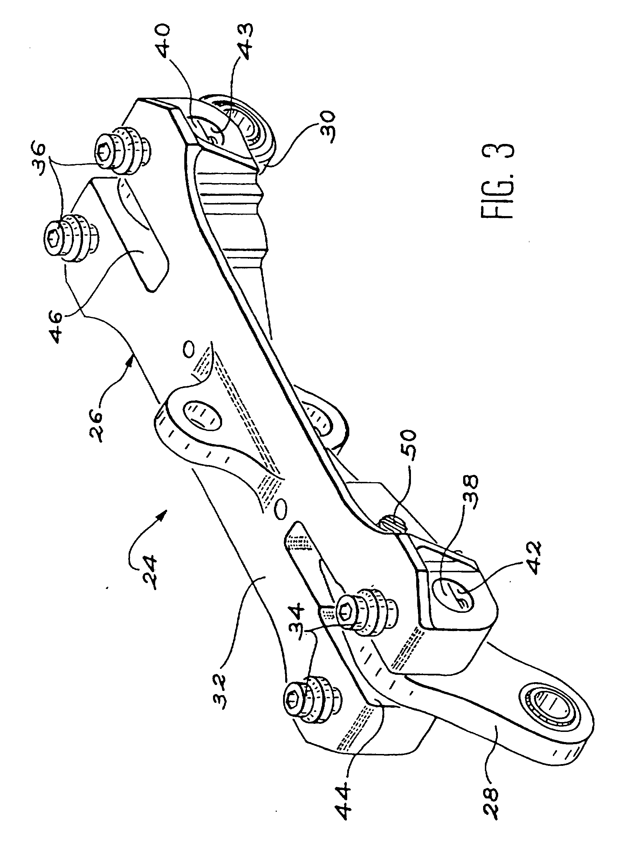

Le deuxième axe 50 qui relie la bielle 28 à la ferrure 26 est décalé vers la partie centrale de cette dernière par rapport à l'axe 48, comme le montrent les figures 2 et 3. Cet axe 50 est reçu dans un alésage qui traverse à la fois l'extrémité de la branche de la bielle 28 reçue dans la saignée 44 et la chape formée dans la ferrure 26 par cette saignée.

De façon classique, l'extrémité de l'autre branche de la bielle 28 est reliée à la pièce 22 par un troisième axe 52. Plus précisément, ce troisième axe 52 est reçu dans un alésage qui traverse à la fois la bielle 28 et une chape 54 (figure 2) qui fait saillie vers l'extérieur à partir du bord périphérique de la pièce 22.

La liaison entre la ferrure 26 et la bielle latérale simple 30 est assurée par un axe unique (non représenté). Conformément à l'invention, cet axe est monté dans le même alésage 43 que les écrous à barillets 40 dans lesquels sont vissées les vis 36. En d'autres termes, l'axe précité et les écrous à barillet 40 sont disposés coaxialement dans l'alésage 43. Le montage de cet axe peut être réalisé de différentes manières, comme celui de l'axe 48. La description qui sera faite ultérieurement des différentes possibilités de montage de l'axe 48 s'applique donc également à l'axe reliant la bielle 30 à la ferrure 26.

La liaison entre la bielle 30 et la pièce 22 est assurée par un deuxième axe 56. Cet axe 56 est logé dans un alésage qui traverse à la fois la deuxième extrémité de la bielle et une chape 58 qui fait saillie vers l'extérieur à partir du bord périphérique de la pièce 22.

Tous les axes, tels que les axes 48, 50, 52 et 56, qui relient les bielles 28 et 30 d'une part à la ferrure 26 et d'autre part à la pièce 22, sont orientés parallèlement à l'axe du moteur. De plus, le montage de chacun de ces axes sur la bielle correspondante est assuré par l'intermédiaire d'une rotule. Ainsi, dans le cas de l'axe 48, la figure 4 montre que cet axe est reçu dans un alésage pratiqué dans une rotule 60. La rotule 60 est à son tour reçue dans un logement sphérique usiné dans une pièce 62, elle-même montée dans un alésage qui traverse la bielle 28.

Comme on l'a déjà observé, le montage de l'axe 48 et des écrous à barillets 38 dans l'alésage 42 et le montage de l'axe (non représenté) reliant la bielle 30 à la ferrure 26 et des écrous à barillets 40 dans l'alésage 43 sont réalisés selon des agencements identiques. Par conséquent, la description qui va à présent être faite en se référant successivement aux figures 4 à 9, dans le cas de l'axe 48 et des écrous à barillets 38, s'applique également au montage de l'axe reliant la bielle 30 à la ferrure 26 et les écrous à barillets 40 dans l'alésage 43.

Comme l'illustre notamment la figure 4, les deux écrous à barillets 38 sont logés respectivement dans les deux tronçons de l'alésage 42, formés dans la ferrure 26 de part et d'autre de la saignée 44. L'axe 48 est monté entre ces deux écrous à barillets 38, de façon à traverser la saignée 44 et à pénétrer au moins en partie dans les tronçons précités de l'alésage 42, dans des parties d'extrémité de ces tronçons débouchant dans la saignée 44.

Sur les figures 4 à 9, on a représenté de façon détaillée différentes formes de réalisation du montage conjoint de l'axe 48 et des écrous à barillets 38 dans l'alésage 42.

La forme de réalisation illustrée sur la figure 4 concernez le cas où l'axe 48 présente un diamètre extérieur inférieur à celui des écrous à barillets 38. Dans ce cas, l'alésage 42 est usiné de façon à pouvoir recevoir les écrous à barillets 38. En d'autres termes, l'alésage 42 et les écrous à barillets 38 ont le même diamètre.

L'axe 48 présente donc un diamètre inférieur à celui de l'alésage 42. Par conséquent, des bagues 64 sont interposées entre les parties d'extrémité de l'axe 48 et les parties correspondantes des tronçons de l'alésage 42 dans lesquelles ces parties extrémités sont reçues.

Dans la forme de réalisation illustrée sur la figure 4, les bagues 64 comportent une partie épaulée, interposée entre la rotule 60 et les flancs de la saignée 44. Dans une variante de réalisation non représentée, les bagues 64 peuvent aussi être des bagues simples, dépourvues de partie épaulée.

La forme de réalisation de l'invention illustrée sur la figure 5 concerne le cas inverse de celui de la figure 4, dans lequel le diamètre extérieur de l'axe 48 est supérieur à celui des écrous à barillets 38. Dans ce cas, le diamètre de l'alésage 42 est le même que celui de l'axe 48. Par conséquent, les écrous à barillets 38 présentent un diamètre extérieur inférieur à celui de l'alésage 42.

Dans la forme de réalisation illustrée sur la figure 5, cette différence de diamètre est prise en compte en utilisant un axe 48 de plus grande longueur, qui traverse la saignée 44 et s'étend sensiblement sur toute la longueur de chacun des deux tronçons de l'alésage 42 situés de part et d'autre de cette saignée. Pour permettre la réception des écrous à barillets 38, des logements 66 sont usinés dans les parties d'extrémité de l'axe 48, reçues dans chacun des tronçons de l'alésage 42. Plus précisément, ces logements 66 sont des alésages borgnes qui sont usinés coaxialement dans l'axe 48, selon un diamètre identique au diamètre extérieur des écrous à barillets 38. La profondeur de ces alésages borgnes permet d'y loger en totalité les écrous à barillets 38, comme le montre la figure 5.

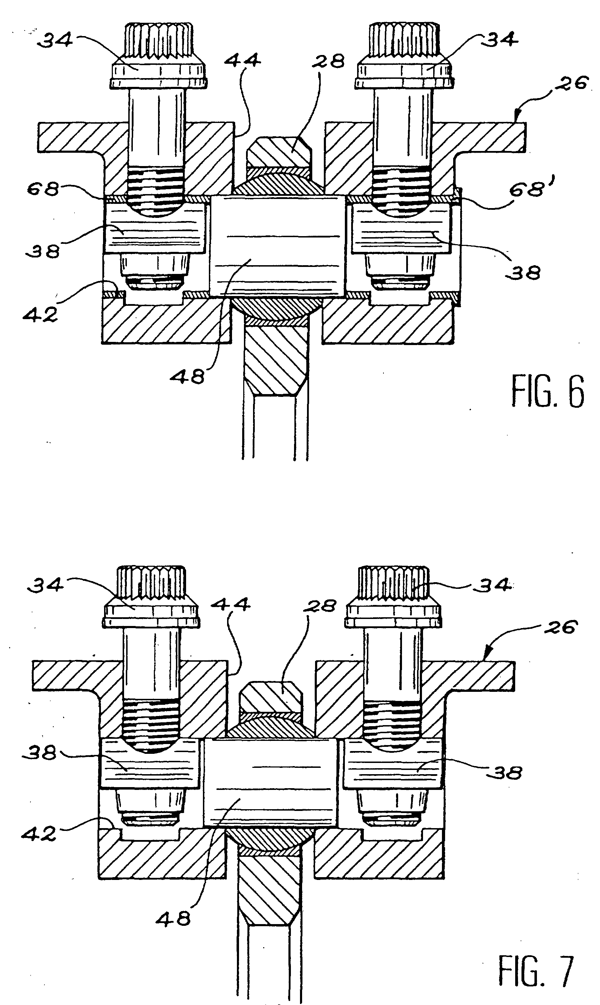

La figure 6 illustre une autre forme de réalisation de l'invention, qui concerne le même cas que la forme de réalisation de la figure 5, dans lequel le diamètre extérieur de l'axe 48 est supérieur à celui des écrous à barillets 38.

Dans la forme de réalisation de la figure 6, l'axe 48 présente une longueur comparable à celle qu'il présente dans la forme de réalisation de la figure 4. En d'autres termes, l'axe 48 traverse la saignée 44 et comporte des parties d'extrémité qui sont reçues dans des parties des tronçons de l'alésage 42 interposées entre la saignée 44 et les écrous à barillets 38. Du fait que le diamètre de l'axe 48 est égal à celui de l'alésage 42, les parties d'extrémité de l'axe sont en contact direct avec l'alésage.

Pour tenir compte du fait que les écrous à barillets 38 présentent alors un diamètre extérieur inférieur à celui de l'alésage 42, des bagues 68 sont interposées entre chacun des écrous à barillets 38 et le tronçon correspondant de l'alésage 42, au-delà des extrémités de l'axe 48.

Comme on l'a représenté sur la partie gauche de la figure 6, les bagues 68 peuvent être des bagues simples, reçues en totalité dans le tronçon correspondant de l'alésage 42. En variante et comme on l'a représenté sur la partie droite de la figure 6, les bagues 68' peuvent aussi comporter une partie épaulée, en appui sur la face extérieure de la ferrure 26.

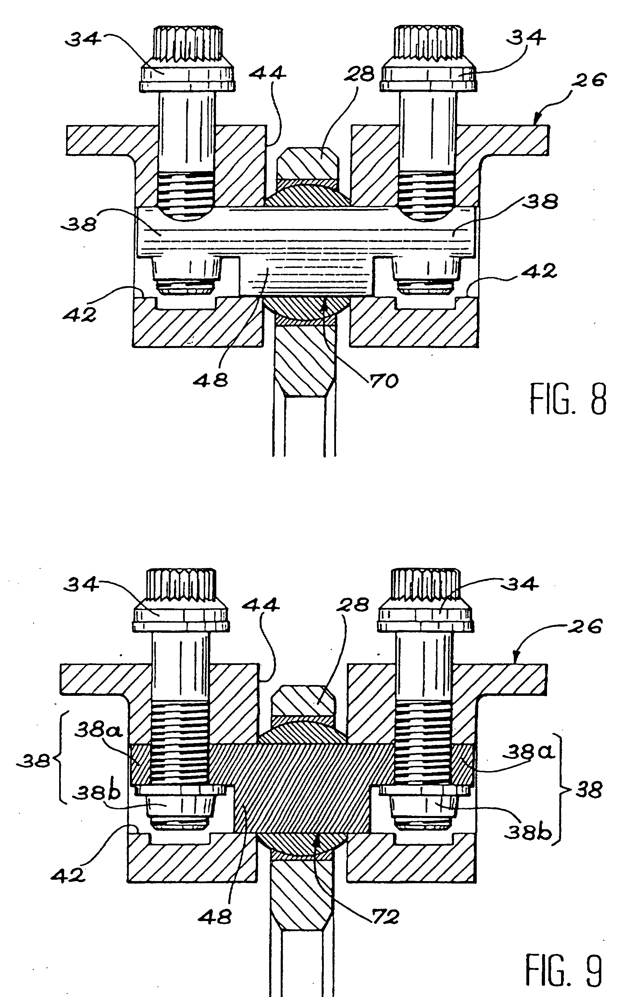

La figure 7 représente une autre forme de réalisation de l'invention, appliquée au cas où l'axe 48, les écrous à barillets 38 et l'alésage 42 présentent tous le même diamètre.

Dans cette forme de réalisation de la figure 7, les montages de l'axe 48 et des écrous à barillets 38 sont respectivement les mêmes que ceux de l'axe 48 dans la forme de réalisation de la figure 6 et des écrous à barillets 38 dans la forme de réalisation de la figure 4. En d'autres termes, l'axe 48 traverse la saignée 44 et ses extrémités pénètrent directement dans les parties des tronçons de l'alésage 42 adjacentes à la saignée 44. Par ailleurs, les écrous à barillets 38 sont montés directement dans les parties restantes des tronçons de l'alésage 42, au-delà des extrémités de l'axe 48.

La forme de réalisation illustrée sur la figure 8 concerne également le cas où l'axe 48, les écrous à barillets 38 et l'alésage 42 présentent tous trois le même diamètre.

Dans cette forme de réalisation de la figure 8, l'axe 48 et les écrous à barillets 38 sont réalisés d'un seul tenant sous la forme d'une seule pièce 70, de diamètre uniforme, qui s'étend sur toute la longueur de l'alésage 42, en traversant la saignée 44. L'axe 48 est alors formé par la partie centrale de la pièce 70, dont les extrémités constituent les écrous à barillets 38. Cet agencement permet d'améliorer la résistance de l'axe et de diminuer le nombre de pièces constituant l'assemblage.

Sur la figure 9, on a représenté encore une autre forme de réalisation de l'invention qui concerne le cas où l'axe 48, les écrous à barillets 38 et l'alésage 42 présentent le même diamètre.

Dans cette forme de réalisation, qui constitue une variante de la précédente, les écrous à barillets 38 sont réalisés en deux parties incluant un support cylindrique 38a et un écrou flottant 38b. L'axe 48 et les supports 38a des écrous à barillets 38 sont réalisés en une seule pièce 72, de diamètre uniforme, reçue directement dans l'alésage 42 et s'étendant sensiblement sur toute la longueur de cet alésage au travers de la saignée 44. Cette forme de réalisation permet, comme la précédente, d'améliorer la résistance de l'axe 48. Elle a en outre pour avantage de faciliter le montage des vis 34 grâce au caractère flottant des écrous 38b. La réalisation de l'assemblage est ainsi améliorée.

Quelle que soit la forme de réalisation, il est à noter qu'un dispositif s'opposant à la rotation de l'axe 48 dans l'alésage 42 peut être prévu, en ayant recours à des techniques connues de l'homme du métier.

L'agencement qui vient d'être décrit en se référant aux figures 2 à 9 permet de donner à la ferrure 26 et aux bielles, telles que 28 et 30, qui la relient au moteur des dimensions minimales dans le sens circonférentiel et dans le sens radial par rapport à l'axe du moteur. L'agencement particulièrement compact ainsi obtenu permet d'implanter des moteurs de nouvelle génération à caractéristiques de poussée accrues, sans accroître les perturbations de l'écoulement de l'air et même en les diminuant, ce qui entraîne là encore un gain de poussée.

En outre, le dispositif d'accrochage selon l'invention est plus léger que les dispositifs équivalents réalisés selon la technique antérieure, du fait de la réduction de taille de la ferrure.

Il est à noter que l'invention s'applique indifféremment à des dispositifs d'accrochage comportant deux à quatre bielles, la liaison entre les bielles supplémentaires et la ferrure étant alors réalisée de façon conventionnelle.

## Revendications

1. Dispositif d'accrochage d'un moteur (22) sur un pylône (20) fixé à une structure d'aéronef, comprenant une ferrure intermédiaire (26) apte à être fixée au pylône par des vis (34,36) vissées dans des écrous à barillets (38, 40) logés dans des alésages (42, 43) traversant la ferrure (26), et au moins deux bielles (28, 30) articulées sur la ferrure par des axes (48, 50), de façon à relier la ferrure au moteur, **caractérisé par le fait qu'**au moins l'un (48) desdits axes est monté dans l'un des alésages (42, 43) logeant les écrous (38).

2. Dispositif selon la revendication 1, dans lequel deux écrous (38, 40) sont logés respectivement dans deux tronçons de chaque alésage (42, 43), situés de part et d'autre d'une saignée (44, 46) que traverse l'une des bielles (28, 30), de telle sorte que ledit axe (48) est monté au moins dans des parties desdits tronçons adjacentes à la saignée.

3. Dispositif selon la revendication 2, dans lequel ledit axe (48) a un diamètre inférieur à celui de l'alésage (42, 43) et est monté dans lesdits tronçons de celui-ci par l'intermédiaire de deux bagues (64), les deux écrous à barillets (38, 40) étant logés dans chacun des tronçons de l'alésage, au-delà des extrémités de l'axe (48).

4. Dispositif selon la revendication 2, dans lequel les deux écrous à barillets (38, 40) ont un diamètre inférieur à celui de l'alésage (42, 43) et sont reçus dans des logements (66) usinés dans des parties d'extrémité dudit axe (48) montées dans lesdits tronçons de l'alésage.

5. Dispositif selon la revendication 2, dans lequel les deux écrous à barillets (38, 40) ont un diamètre inférieur à celui de l'alésage (42, 43) et sont montés dans lesdits tronçons de celui-ci, au-delà des extrémités dudit axe (48), par l'intermédiaire de deux bagues (68, 68').

6. Dispositif selon la revendication 2, dans lequel les deux écrous à barillets (38, 40) ont un diamètre égal à celui dudit axe (48) et sont montés dans lesdits tronçons de l'alésage (42, 43), au-delà des extrémités de l'axe.

7. Dispositif selon la revendication 2, dans lequel les deux écrous à barillets (38, 40) et ledit axe (48) sont réalisés en une seule pièce (70) de diamètre uniforme.

8. Dispositif selon la revendication 2, dans lequel deux supports d'écrous (38a) et ledit axe (48) sont réalisés en une seule pièce (72) de diamètre uniforme, des écrous flottants (38b) étant montés dans les supports d'écrous (38a).

9. Dispositif selon l'une quelconque des revendications 1 à 8, dans lequel la ferrure intermédiaire (26) est apte à être fixée au pylône par quatre vis (34, 36), vissées dans quatre écrous (38, 40) logés deux à deux dans deux alésages (42, 43) traversant des régions d'extrémité de la ferrure, deux axes (48) d'articulation de deux bielles (28, 30) étant reçus respectivement dans lesdits alésages.

## Claims

1. Device for attaching an engine (22) onto a pylon (20) fixed to an aircraft structure, comprising an intermediate fitting (26) capable of being fixed to the pylon by bolts (34, 36) screwed into barrel nuts (38, 40) housed in bores (42, 43) passing through the fitting (26) and at least two connecting arms (28, 30) articulated on the fitting by pins (48, 50) in a way that links the fitting to the engine, **characterized in that** at least one (48) of said pins is mounted in one of the bores (42, 43) housing the nuts (38).

2. Device according to claim 1, in which two nuts (38, 40) are housed respectively in two sections of each bore (42, 43) situated on either side of a groove (44, 46) which crosses one of the connecting arms (28, 30) in such a way that said pin (48) is mounted at least in parts of said section adjacent the groove.

3. Device according to claim 2, in which said pin (48) has a diameter less than that of the bore (42, 43) and is mounted in said sections of the bore using two rings (64), the two barrel nuts (38, 40) being housed in each of the sections of the bore, beyond the ends of the pin (48).

4. Device according to claim 2, in which the two barrel nuts (38, 40) have a diameter less than that of the bore (42, 43) and are received in housings (66) machined in end portions of said pin (48) mounted in said sections of the bore.

5. Device according to claim 2, in which the two barrel nuts (38, 40) have a diameter less than that of the bore (42, 43) and are mounted in said sections of the bore, beyond the ends of said pin (48), using two rings (68, 68').

6. Device according to claim 2, in which the two barrel nuts (38, 40) have a diameter equal to that of said pin (48) and are mounted in said sections of the bore (42, 43), beyond the ends of the pin.

7. Device according to claim 2, in which the two barrel nuts (38, 40) and said pin (48) are produced as a single component (70) of uniform diameter.

8. Device according to claim 2, in which two nut carriers (38a) and said pin (48) are produced as a single component (72) of uniform diameter, floating nuts (38b) being mounted in the nut carriers (38a).

9. Device according to any one of the claims 1 to 8, in which the intermediate fitting (26) is capable of being fixed to the pylon by four bolts (34, 36), screwed into four nuts (38, 40) housed two by two in two bores (42, 43) passing through end regions of the fitting, two pins (48) for the articulation of two connecting arms (28, 30) being received respectively in said bores.

## Patentansprüche

1. Aufhängungsvorrichtung eines Triebwerks (22) an einem Trägermast (20), der an einer Luftfahrzeugstruktur befestigt ist, mit einer Zwischenarmatur (26), die durch Schrauben (34,36), die in Spannschlossmuttern (38,40), welche in die Armatur (26) durchsetzenden Bohrungen (42,43) aufgenommen sind, am Trägermast befestigt werden kann, und mindestens zwei Pleueln (28,30), die an der Armatur über Achsen (48,50) so angelenkt sind, dass sie die Armatur mit dem Motor verbinden,
**dadurch gekennzeichnet, dass**
mindestens eine (48) der Achsen in einer der die Muttern (38) aufnehmenden Bohrungen (42,43) angeordnet ist.

2. Vorrichtung nach Anspruch 1, wobei sich die beiden Muttern (38,40) jeweils in zwei Teilstücken jeder Bohrung (42,43) befinden, die auf beiden Seiten einer Fuge bzw. Aussparung (44,46), die eines der Pleuel (28,30) kreuzt, so gelegen sind, dass die Achse (48) mindestens in Abschnitten der Teilstücke angebracht ist, die an die Fuge angrenzen.

3. Vorrichtung nach Anspruch 2, wobei die Achse (48) einen Durchmesser aufweist, der kleiner ist als der der Bohrung (42,43), und in Teilstücken derselben mittels zweier Lagerringe (64) angebracht ist, wobei die beiden Spannschlossmuttern (38,40) in jedem der Teilstücke der Bohrung jenseits der Enden der Achse (48) angeordnet sind.

4. Vorrichtung nach Anspruch 2, wobei die beiden Spannschlossmuttern (38,40) einen Durchmesser aufweisen, der geringer als der der Bohrung (42,43) ist und in Sitzen bzw. Aufnahmen (66) aufgenommen sind, die in die in den Teilstücken der Bohrung angebrachten Endabschnitte der. Achse (48) eingebaut bzw. eingearbeitet sind.

5. Vorrichtung nach Anspruch 2, wobei die beiden Spannschlossmuttern (38,40) einen Durchmesser auf weisen, der kleiner ist als der der Bohrung (42,43), und in deren Teilstücken jenseits der Enden der Achse (48) über zwei Lagerringe (68,68') montiert sind.

6. Vorrichtung nach Anspruch 2, wobei die beiden Spannschlossmuttern (38,40) einen Durchmesser auf weisen, der gleich demjenigen der Achse (48) ist, und in den Teilstücken der Bohrung (42,43) jenseits der Enden der Achse angebracht sind.

7. Vorrichtung nach Anspruch 2, wobei die.beiden Spannschlossmuttern (38,40) und die Achse (48) aus einem einzigen Stück (70) von gleichmäßigem Durchmesser gefertigt sind.

8. Vorrichtung nach Anspruch 2, wobei die beiden Lager bzw. Halterungen (38a) der Muttern und die Achse (48) aus einem einzigen Stück (72) von gleichmäßigem Durchmesser gefertigt sind, wobei Muttern (38b) schwimmend bzw. frei beweglich in den Mutterhalterungen (38a) angebracht sind.

9. Vorrichtung nach einem der Ansprüche 1 bis 8, wobei die Zwischenarmatur (26) durch vier Schrauben (34,36), die in vier Muttern (38,40) eingeschraubt sind, die sich jeweils paarweise in zwei Bohrungen (42,43) befinden, welche die Endbereiche der Armatur durchsetzen, am Trägermast befestigt werden kann, wobei zwei Gelenkachsen (48) von zwei Pleueln (28,30) jeweils in den Bohrungen aufgenommen sind.
